# EUROPEAN PATENT SPECIFICATION

(11) **EP 0 711 257 B1**
(45) Date of publication and mention of the grant of the patent: **13.08.1997**
(21) Application number: 95921756.3
(22) Date of filing: 24.05.1995
(51) Int. Cl.: C03C 13/00

(54) **GLASS-FIBER COMPOSITIONS**
GLASFASERZUSAMMENSETZUNGEN
COMPOSITIONS DE FIBRES DE VERRE

(30) Priority: 28.05.1994 DE 4418728; 01.02.1995 DE 19503171
(43) Date of publication of application: 15.05.1996
(73) Proprietor: ISOVER SAINT-GOBAIN, F-92400 Courbevoie (FR)
(72) Inventor: ROUYER, Elisabeth, F-92600 Asnières (FR); DE MERINGO, Alain, F-75005 Paris (FR); MAUGENDRE, Stéphane, F-60460 Précy-sur-Oise (FR); SAINTE-FOI, Daniel, F-60600 Clermont (FR)
(74) Representative: Kador & Partner
(86) International application number: EP9501992
(87) International publication number: WO9532926

(56) References cited:
- EP-A- 0 019 600
- EP-A- 0 412 878
- EP-A- 0 588 251
- GLASTECHNISCHE BERICHTE, vol. 64, no. 1, January 1991 FRANKFURT DE, pages 16-28, XP 000178832 R. M. POTTER ET AL. 'Glass Fiber Dissolution in a Physiological Saline Solution'

## Description

The present invention relates to a glass-fiber composition that is biologically degradable.

The prior art describes some glass-fiber compositions which are said to be biologically degradable.

The biological degradability of glass-fiber compositions is of great importance because various studies point out that some glass fibers with very small diameters in the range of less than 3 microns are suspected to be carcinogenic, while biologically degradable glass fibers of such dimensions show no carcinogenicity.

However not only the biological degradability is of crucial importance but also the mechanical and thermal properties of the glass fibers, or the products produced therefrom, the resistance of the glass fibers and the processibility of the glass-fiber composition. For example glass fibers are used to a great extent for insulation purposes. For these applications sufficient moisture-resistance is necessary.

Also, the glass-fiber composition must permit processibility by known methods for producing glass fibers with a small diameter, for example the centrifugal technique, in particular the inner centrifugal technique (this technique is described for example in US-PS G 4 203 745) .

EP-A-0 019 600 describes fiber glass compositions for glass wool insulations which comprise silica, alumina, alkaline earth oxides, sodium oxide, boron oxide, zinc oxide and traces of iron oxide.

The report published in "Glastechnische Berichte", vol. 64, no. 1 (1991) presents compositions which consist of SiO₂, Al₂O₃, CaO, MgO, Na₂O, B₂O₃ and other oxides as optional ingredients and their dissolution rates under conditions approximating those thought to exist in the lung.

Inorganic fibers which are degradable or biosoluble in physiological media are disclosed in EP-A-0 412 878, and EP-A-0 588 251. These fibers comprise silica, alkaline earth oxide, alkali oxide and boron oxide. The fibers according to EP-A-0 588 251 furthermore contain zirconium oxide as compulsory ingredient.

The invention is based on the problem of providing a novel glass-fiber composition that is characterized by biological degradability, has good stability or resistance to moisture and is easy to process.

The invention is based on the finding that this problem can be solved by a glass-fiber composition that substantially has considerable amounts of alkaline-earth oxide, alkali oxide and boron oxide and also contains barium oxide.

It has turned out that such a glass-fiber composition fulfills the combination of the necessary properties, namely biological degradability, resistance to moisture and good processibility.

The object of the invention is a glass-fiber composition that is biologically degradable, characterized by the following constituents in percent by weight:

| | |
|---|---|
| SiO₂ | 45 to 60 |
| Al₂O₃ | less than 2 |
| CaO + MgO | 10 to 16 |
| Na₂O + K₂O | 14 to 20 |
| B₂O₃ | 7 to 18 |
| P₂O₅ | 0 to 4 |
| BaO | 1 to 5 |
| Ti, Zn, Sr, Fe, Mn oxide | 0 to 1.5 |
| Diverse | up to 0.5. |

The inventive glass-fiber compositions are processible by the centrifugal technique. The obtained fibers have good resistance to moisture. Surprisingly enough, the glass-fiber compositions show biological degradability. The mean fiber diameter is preferably less than 10 microns and is in particular between 2.5 and 5 microns.

The inventive glass-fiber compositions preferably have the following constituents in percent by weight:

| | |
|---|---|
| SiO₂ | 53 to 60 |
| Al₂O₃ | 0 to 1.5 |
| CaO + MgO | 10 to 13 |
| Na₂O + K₂O | 14 to 18 |
| B₂O₃ | 8 to 14 |
| P₂O₅ | 0 to 2.0 |
| BaO | 1.5 to 3 |
| Ti, Zn, Sr, Fe, Mn oxide | 0 to 1.5 |
| Diverse | up to 0.5. |

According to a further preferred embodiment the inventive glass-fiber compositions have the following constituents in percent by weight:

| | |
|---|---|
| SiO₂ | 46 to 55 |
| Al₂O₃ | less than 2 |
| CaO + MgO | 10 to 14 |
| Na₂O + K₂O | 14 to 17 |
| B₂O₃ | 10 to 17 |
| P₂O₅ | 0 to 2.0 |
| BaO | 3 to 5 |
| Ti, Zn, Sr, Fe, Mn oxide | 0 to 1.5 |
| Diverse | up to 0.5. |

Barium oxide has a positive influence on moisture-resistance and presumably also on biological degradability.

The inventive compositions can contain up to 1.5 percent by weight titanium oxide, zinc oxide, strontium oxide, lithium oxide, iron oxide and/or manganese oxide. Mixtures of 2 or 3 of these oxides are particularly preferred.

Phosphorus oxide is preferably present in an amount of 0.1 to 2 percent by weight, in particular 0.3 to 1.5 percent by weight. Phosphorus oxide has a positive influence on biological degradability.

According to a preferred embodiment the composition contains less than 2 percent by weight magnesium oxide.

The moisture-resistance of the inventive glass-fiber compositions was determined by a standard method known as the DGG method. In the DGG method 10 g finely ground glass with a grain size between about 360 and 400 microns is held at the boiling point for five hours in 100 ml water. After quick cooling of the material the solution is filtered and a certain volume of the filtrate evaporated to dryness. The weight of the thus obtained dry material permits the amount of glass dissolved in the water to be calculated. The amount is stated in milligrams per gram of tested glass.

The biological degradability of the inventive glass compositions was tested by introducing 1 g of the glass powder, as described for the DGG method, into a physiological solution with the composition stated below and a pH value of 7.4:

| | |
|---|---|
| NaCl | 6.78 |
| NH₄Cl | 0.535 |
| NaHCO₃ | 2.268 |
| NaH₂PO₄H₂O | 0.166 |
| (Na₃ citrate) 2H₂O | 0.059 |
| Glycine | 0.450 |
| H₂SO₄ | 0.049 |
| CaCl₂ | 0.022 |

Dynamic test conditions were selected as are described in Scholze and Conradt. The flow rate was 300 ml/day. The duration of the test was 14 days. The results are stated as percent of SiO₂ in the solution x 100 after 14 days.

The invention shall be described in more detail in the following with reference to examples.

### Example 1

A glass of the following composition in percent by weight was melted:

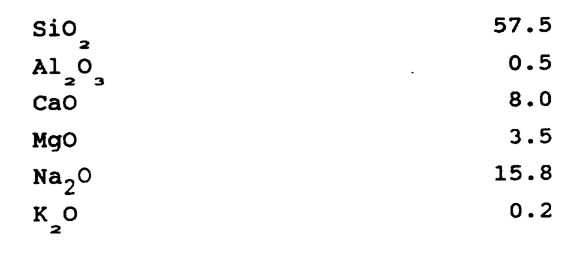

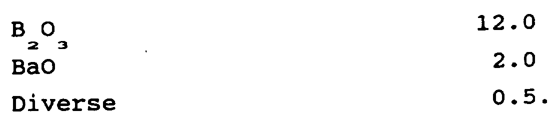

These glass compositions could be processed by the centrifugal technique.

Using the above-described DGG method a value of 40 was determined.

The above-described test for biological degradability yielded a value of 500.

### Example 2

A glass with the following composition in percent by weight was melted:

| | |
|---|---|
| SiO₂ | 56.5 |
| Al₂O₃ | 0.5 |
| CaO | 8.0 |
| MgO | 3.5 |
| Na₂O | 15.8 |
| K₂O | 0.2 |
| B₂O₃ | 12.0 |
| BaO | 2.0 |
| P₂O₅ | 1.0 |
| Diverse | 0.5. |

These glass compositions could be processed by the centrifugal technique.

Using the above-described DGG method a value of 40 was determined.

The above-described test for biological degradability yielded a value of 600.

## Claims

1. A glass-fiber composition that is biologically degradable, characterized by the following constituents in percent by weight:
| | |
|---|---|
| SiO₂ | 45 to 60 |
| Al₂O₃ | less than 2 |
| CaO + MgO | 10 to 16 |
| Na₂O + K₂O | 14 to 20 |
| B₂O₃ | 7 to 18 |
| P₂O₅ | 0 to 4 |
| BaO | 1 to 5 |
| Ti, Zn, Sr, Fe, Mn oxide | 0 to 1.5 |
| Diverse | up to 0.5. |

2. The glass-fiber composition of claim 1, characterized by the following constituents in percent by weight:
| | |
|---|---|
| SiO₂ | 53 to 60 |
| Al₂O₃ | 0 to 1.5 |
| CaO + MgO | 10 to 13 |
| Na₂O + K₂O | 14 to 18 |
| B₂O₃ | 8 to 14 |
| P₂O₅ | 0 to 2.0 |
| BaO | 1.5 to 3 |
| Ti, Zn, Sr, Fe, Mn oxide | 0 to 1.5 |
| Diverse | up to 0.5. |

3. The glass-fiber composition of claim 1, characterized by the following constituents in percent by weight:

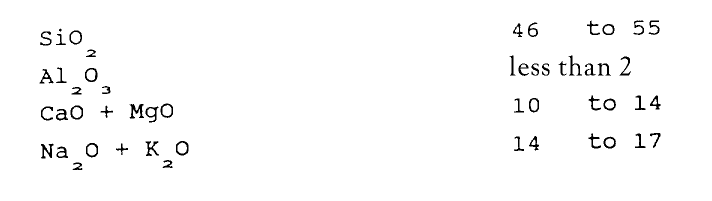

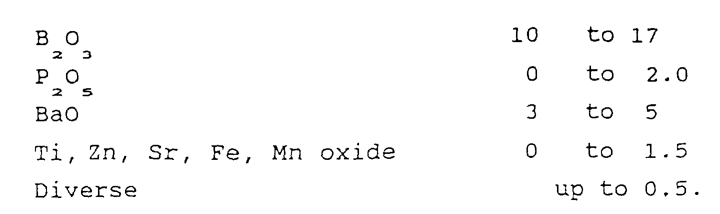

4. The glass-fiber composition of any of claims 1 to 3, characterized in that the composition contains up to 1.5 percent by weight titanium oxide, zinc oxide, strontium oxide, lithium oxide, iron oxide, manganese oxide and mixtures thereof.

5. The glass-fiber composition of any of claims 1 to 4, characterized in that the composition contains 0.1 to 2 percent by weight, in particular 0.3 to 1.5 percent by weight, phosphorus oxide.

6. The glass-fiber composition of any of claims 1 to 5, characterized in that the composition contains less than 2 percent by weight magnesium oxide.

## Patentansprüche

1. Glasfaserzusammensetzung, die biologisch abbaubar ist, **gekennzeichnet durch** die folgenden Bestandteile in Gewichtsprozent:
| | |
|---|---|
| SiO₂ | 45 bis 60 |
| Al₂O₃ | weniger als 2 |
| CaO + MgO | 10 bis 16 |
| Na₂O + K₂O | 14 bis 20 |
| B₂O₃ | 7 bis 18 |
| P₂O₅ | 0 bis 4 |
| BaO | 1 bis 5 |
| Ti, Zn, Sr, Fe, Mn Oxid | 0 bis 1.5 |
| Diverse | bis zu 0.5. |

2. Glasfaserzusammensetzung nach Anspruch 1, **gekennzeichnet durch** die folgenden Bestandteile in Gewichtsprozent:
| | |
|---|---|
| SiO₂ | 53 bis 60 |
| Al₂O₃ | 0 bis 1.5 |
| CaO + MgO | 10 bis 13 |
| Na₂O + K₂O | 14 bis 18 |
| B₂O₃ | 8 bis 14 |
| P₂O₅ | 0 bis 2.0 |
| BaO | 1.5 bis 3 |
| Ti, Zn, Sr, Fe, Mn Oxid | 0 bis 1.5 |
| Diverse | bis zu 0.5. |

3. Glasfaserzusammensetzung nach Anspruch 1, **gekennzeichnet durch** die folgenden Bestandteile in Gewichtsprozent:
| | |
|---|---|
| SiO₂ | 46 bis 55 |
| Al₂O₃ | weniger als 2 |
| CaO + MgO | 10 bis 14 |
| Na₂O + K₂O | 14 bis 17 |
| B₂O₃ | 10 bis 17 |
| P₂O₅ | 0 bis 2.0 |
| BaO | 3 bis 5 |
| Ti, Zn, Sr, Fe, Mn Oxid | 0 bis 1.5 |
| Diverse | bis zu 0.5. |

4. Glasfaserzusammensetzung nach einem der Ansprüche 1 bis 3, **dadurch gekennzeichnet**, daß die Zusammensetzung bis zu 1.5 Gewichtsprozent Titanoxid, Zinkoxid, Strontiumoxid, Lithiumoxid, Eisenoxid, Manganoxid und Mischungen davon enthält.

5. Glasfaserzusammensetzung nach einem der Ansprüche 1 bis 4, **dadurch gekennzeichnet**, daß die Zusammensetzung 0.1 bis 2 Gewichtsprozent, insbesondere 0.3 bis 1.5 Gewichtsprozent, Phosphoroxid enthält.

6. Glasfaserzusammensetzung nach einem der Ansprüche 1 bis 5, **dadurch gekennzeichnet**, daß die Zusammensetzung weniger als 2 Gewichtsprozent Magnesiumoxid enthält.

## Revendications

1. Une composition de fibres de verre qui est biologiquement dégradable, caractérisée par les constituants suivants exprimés en pourcentage par poids :
| | |
|---|---|
| Si O₂ | 45 à 60 |
| Al₂O₃ | inférieur à 2 |
| CaO + MgO | 10 à 16 |
| Na₂O + K₂O | 14 à 20 |
| B₂O₃ | 7 à 18 |
| P₂O₅ | 0 à 4 |
| BaO | 1 à 5 |
| Oxyde de Titane, Zinc, Sr, Fer, Mn | 0 à 1,5 |
| Divers | jusqu'à 0,5. |

2. Composition de fibres de verre selon la revendication 1, caractérisée par les constituants suivants exprimés en pourcentage par poids :
| | |
|---|---|
| SiO₂ | 53 à 60 |
| Al₂O₃ | 0 à 1,5 |
| CaO + MgO | 10 à 13 |
| Na₂O + K₂O | 14 à 18 |
| B₂O₃ | 8 à 14 |
| P₂O₅ | 0 à 2,0 |
| BaO | 1,5 à 3 |
| Oxyde de Titane, Zinc, Sr, Fer, Mn | 0 à 1,5 |
| Divers | jusqu'à 0,5. |

3. Composition de fibres de verre selon la revendication 1, caractérisée par les constituants suivants exprimés en pourcentage par poids :

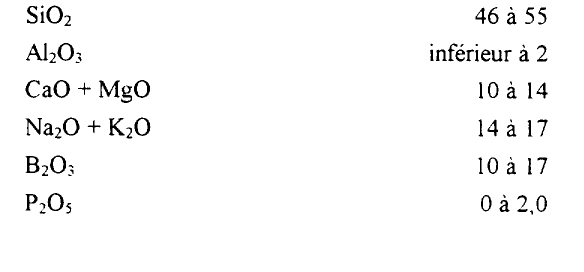

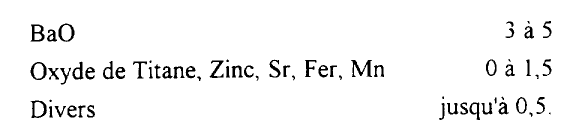

4. Composition de fibres de verre selon l'une quelconque des revendications 1 à 3, caractérisée en ce que la composition contient jusqu'à 1,5 pour cent en poids d'oxyde de titane, d'oxyde de zinc, d'oxyde de strontium, d'oxyde de lithium, d'oxyde de fer, d'oxyde de manganèse et de mélanges de ceux-ci

5. Composition de fibres de verre selon l'une quelconque des revendications 1 à 4, caractérisée en ce que la composition contient de 0,1 à 2 % en poids, en particulier de 0,3 à 1,5 % en poids, d'oxyde de phosphore.

6. Composition de fibres de verre selon l'une quelconque des revendications 1 à 5, caractérisée en ce que la composition contient moins de 2 % en poids d'oxyde de magnésium.
